(19) **Europäisches Patentamt**
**European Patent Office**
**Office européen des brevets**

(11) **EP 1 572 771 B1**

(12) **EUROPEAN PATENT SPECIFICATION**

(45) Date of publication and mention
of the grant of the patent:
**27.06.2012 Bulletin 2012/26**

(51) Int Cl.:
*C08G 18/08* (2006.01)    *C08G 18/48* (2006.01)
*C09D 175/04* (2006.01)    *C08G 18/12* (2006.01)

(21) Application number: **03783756.4**

(22) Date of filing: **24.11.2003**

(86) International application number:
**PCT/US2003/037536**

(87) International publication number:
**WO 2004/052956 (24.06.2004 Gazette 2004/26)**

(54) **POLYURETHANE PREPOLYMER, STABLE AQUEOUS DISPERSIONS WITH HIGH SOLIDS CONTAINING THE SAME AND METHOD OF USING AND PREPARING THE AQUEOUS DISPERSIONS**

POLYURETHAN PREPOLYMER, DARAUS HERGESTELLTE STABILE WÄSSRIGE DISPERSIONEN MIT HOHEM FESTSTOFFGEHALT UND VERFAHREN ZU IHRER HERSTELLUNG

PREPOLYMERE DE POLYURETHANNE, DISPERSIONS AQUEUSES STABLES A FORTE TENEUR EN SOLIDES, CONTENANT LEDIT PREPOLYMERE, ET PROCEDE D'UTILISATION ET DE PREPARATION DESDITES DISPERSIONS AQUEUSES

(84) Designated Contracting States:
**AT BE BG CH CY CZ DE DK EE ES FI FR GB GR HU IE IT LI LU MC NL PT RO SE SI SK TR**

(30) Priority: **11.12.2002 US 316994**

(43) Date of publication of application:
**14.09.2005 Bulletin 2005/37**

(73) Proprietor: **Dow Global Technologies LLC**
**Midland, MI 48674 (US)**

(72) Inventors:
• **BHATTACHARJEE, Debkumar**
**Lake Jackson, TX 77566 (US)**
• **ERDEM, Bedri**
**Pearland, TX 77584 (US)**
• **PARKS, Franklin, E.**
**Jones Creek, TX 77541 (US)**
• **SKAGGS, Kenneth, W.**
**Lake Jackson, TX 77566 (US)**
• **WANG, Kuan, J.**
**Lake Jackson, TX 77566 (US)**

(74) Representative: **Raynor, John et al**
**Beck Greener**
**Fulwood House**
**12 Fulwood Place**
**London**
**WC1V 6HR (GB)**

(56) References cited:
**EP-A- 0 218 881     EP-A- 0 348 105**
**EP-A- 1 164 152     US-A- 6 084 051**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to an aqueous polyurethane dispersion containing a reaction product of water and a polyurethane prepolymer derived from a polyisocyanate, high molecular weight active-hydrogen containing material and a hydrophilic alkylene oxide polyol and/or polyamine. The amount of reaction product in the aqueous dispersion may be as high as 60 weight percent. In addition, the invention relates to a method of manufacturing such high solids content polyurethane. The invention further relates to the polyurethane prepolymer wherein the molecular weight of hydrophilic alkylene oxide polyol or polyamine in the prepolymer is preferably between from 800 to 1,500. The prepolymer preferably contains between from 0.5 to 5.5 percent by weight of the hydrophilic alkylene oxide polyol or polyamine.

The preparation of aqueous polyurethane dispersions is well known in the art *See,* for example, U.S. Patent No. 3,479,310; Angew Chem, 82, 52 (1972); and Angew. Makromol. Chem. 98 (1981) as well as Japanese Application No. 55-110367 (Public Patent Disclosure Bulletin No. 57-39212, 1982) which describes thermally coagulatable polyurethane dispersions having between 6 to 30 weight percent hydrophilic ethylene oxide and having a molecular weight between from 800 to 1,500 g/mole. See further, U.S. Patent No. 3,749,310 (to Dieterich et al) which describes dispersing fully chain extended NCO - free polyurethanes having internal ionic groups, such as carboxylic acids and sulfonic acids, which are capable of forming crosslinks with polyfunctional isocyanates and aziridines. U.S. Patent No. 6,087,440 further discloses the preparation of aqueous and solvent free polyurethane dispersions based on aromatic and/or aliphatic isocyanates and polyether and polyester polyol prepolymers by a continuous mechanical dispersion process.

Aqueous polyurethane dispersions (PUD) are used for a variety of applications ranging from medical instruments to construction to adhesives to coatings of various substrates such as textile, metal, wood, glass, plastics, etc. Disposable health care devices, such as protective gloves, surgical gloves, condoms and tourniquets, may be prepared by introducing a porcelain or metal form of the desired product (a "former") into a solution containing the PUD as coagulant and then putting the coated form into an oven for a sufficient time to remove excess water. A very thin film of coagulant is left on the former. The former is then immersed into a dispersant. During coagulation, ions of the coagulant destabilize the dispersant, thereby leaving a film on the former. The product is then cured and the former removed. Historically, such disposable health care devices were derived from thin film elastomers, predominately vulcanized natural rubber (VNR). Such thin film elastomers, unfortunately, further include proteins and other materials which can be irritating to the skin.

Over the past decade, aqueous PUDs have started to replace solvent-borne polyurethane applications due to increasing environmental concerns and health regulations. Several U.S. patents propose the use of aqueous polyurethane dispersions in the production of disposable health care devices. For example, U.S. Patent No. 5,997,969 discloses the use of an aqueous polyurethane dispersion for the manufacture of protective gloves, condoms, tourniquets and dental dams. These applications require the PUDs to have or exceed various chemical, physical, and mechanical properties of their solvent-based counterparts. For instance, chemical resistance, flexibility, hardness, toughness, and durability are among some of these properties required for given applications. Typically, such products are manufactured at a location different from the production site of the aqueous polyurethane dispersions. It is also important that these aqueous polyurethane dispersions have high solids content, low viscosity, and high shear and shelf stability to satisfy remote manufacturing requirements. High solids content is also important in many applications due to their ability to be quickly dried. Further, depending on their intended end use, freeze-thaw, electrolyte, and pH stability of PUDs are also important.

Unfortunately, the polyurethane dispersions of the prior art typically have insufficient physical or handling properties to make them a preferred material. For instance, insufficient stability of the polyurethane dispersions under storage, and most importantly under relatively reasonable shear during shipping and application conditions, hinders the use of such dispersions in the manufacture of such disposable products. Shipment of dilute polyurethane dispersions, that is at low loading, further increases costs of shipment

The ability to robustly produce aqueous dispersions having small particle size and high solids content enables the formation of improved films, thereby improving the performance of the final product. The use at low concentrations, if any, of surfactants reduces the total amount of non-volatile removables and reduces the water sensitivity of the final products. To minimize transportation costs and drying times, it is further desired to prepare a polyurethane dispersion that maximizes solids content without resort to additional concentration means such as evaporation of water.

In one aspect this invention relates to novel aqueous polyurethane dispersions which may contain up to as high as 60 weight percent solids which contains the reaction product of a prepolymer derived from at least one polyisocyanate, a high molecular weight active-hydrogen containing molecule, a hydrophilic alkylene oxide polyol or polyamine and water. The hydrophilic alkylene oxide polyol or polyamine is a polyoxyethylene polyol, a polyoxyethylene polyamine, a polyoxyethylenepropylene polyol or a polyoxyethylenepropylene polyamine. (As used herein, the terms "polyol" and "polyamine" are meant to be a compound having two or more -OH or -$NH_2$ groups, respectively.) The aqueous polyurethane dispersions of the invention exhibit high shear stability sufficient to prevent coagulation under normal storage, shipping, and process conditions. The particulates of the dispersions of the invention are of submicron particle size. In addition, the polyurethane dispersions of the invention exhibit the requisite sensitivity for use with electrolytes and have manageable viscosities (generally less than or equal to 200,000 cps at 10 rpm, preferably less than 50,000 cps). (As used herein, viscosity is measured by use of a Brookfield viscometer having a no. 6 spindle at 25°C.) The dispersions are stable at high viscosities and can further be diluted to low solids content and thus lower viscosity for a given application. Further, the dispersions of the invention require very small amounts, if any, of surfactant(s).

The aqueous polyurethane dispersions of the invention may have a solids content as high as 60 weight percent, preferably greater than 40 weight percent. In addition, they are characterized by a polydispersity index between from 1.0 to 2.0. The PUDs are typically produced from continuous mechanical dispersion processes at a $r_2:r_1$ ratio not greater than 65:35 w/w wherein $r_2$ is the prepolymer and $r_1$ is the initial aqueous water plus the optional surfactant.

The aqueous polyurethane dispersions are prepared from novel polyurethane prepolymers. Such polyurethane prepolymers comprise the reaction product of at least one aromatic or aliphatic polyisocyanate, an active-hydrogen containing material, such as a saturated aliphatic or aromatic polyester or polyether polyol, and a hydrophilic alkylene oxide polyol or polyamine, selected from polyoxyethylene polyol, polyoxyethylene polyamine, polyoxyethylenepropylene polyamine and polyoxyethylenepropylene polyol. In a preferred embodiment, the hydrophilic alkylene oxide polyol or polyamine has a molecular weight between from 800 to 1,500. (As used herein, molecular weight shall refer to weight average molecular weight.) The amount of hydrophilic alkylene oxide polyol or polyamine in the prepolymer is generally in an amount sufficient to reduce the interfacial tension of the prepolymer to less than or equal to 10 dynes/cm., preferably less than or equal to 5 dynes/cm. In general, the amount of hydrophilic alkylene oxide polyol or polyamine in the prepolymer is between from 0.5 to 5.5 weight percent. The alkylene oxide moieties of the hydrophilic alkylene oxide polyol or polyamine may be either random or block.

The high molecular weight active-hydrogen containing material may generally be characterized as being hydrophobic and preferably exhibits a water solubility of less than 10.0 g per 100 g of water at 25° C.

The invention further relates to articles produced from the PUDs and, in particular, disposable health care devices such as protective and surgical gloves, condoms, medical balloons, catheters, adhesives, coatings, gaskets, and pipings. Elastomers derived from the polyurethane dispersions of the invention may further be a laminate, a backed substrate, film, coating, foam, tubing or other shaped article.

The polyurethane prepolymer of the invention comprises the reaction product of at least one polyisocyanate, a high molecular weight active-hydrogen containing material and a hydrophilic alkylene oxide polyol or polyamine, wherein said hydrophilic alkylene oxide polyol or polyamine is a polyoxyethylene polyol, a polyoxyethylene polyamine, a polyoxyethylenepropylene polyol or a polyoxyethylenepropylene polyamine having a molecular weight between 800 to 1,500, preferably from 850 to 1,200, most preferably from 900 to 1,000. The amount of alkylene oxide polyol or polyamine in the resulting prepolymer is between from 0.5 to 5.5 weight percent, preferably between 0.75 to 5.0, most preferably between 1.0 and 4.0, weight percent. The hydrophilic polyol is a homopolymer, though it may be a random or block copolymer.

The aqueous polyurethane dispersion is made by mixing the prepolymer with water, optionally in the presence of a surfactant or other additive and/or phase modifier and/or a chain extender, at a temperature of from 25 to 90° C, to render the desired polyurethane dispersion. The amount of water, and optional chain extender, reacted with the prepolymer is an equivalent amount to the isocyanate functionality in the prepolymer. An excess of water may also be used.

The polyurethane prepolymer can be prepared by a batch, or a continuous process. For example, a stoichiometric excess of a diisocyanate and the combination of high molecular weight active-hydrogen containing material and hydrophilic ethylene oxide polyol can be introduced in separate streams into a static or an active mixer, preferably in the presence of an activating amount of an organotin catalyst such as stannous octoate, and at a temperature suitable for controlled reaction of the reagents, typically from 40 °C to 100 °C at atmospheric pressure. The reaction may be carried to substantial completion in a plug flow reactor to form the prepolymer. If the polyurethane dispersion of the invention is prepared by a batch process, the dispersion is preferably prepared by a phase inverse process wherein a small amount of water is added to the continuous polyurethane phase and mixed and then more water is added with mixing until the phase inverts.

The polyurethane dispersions of the invention, preferably made as a high internal phase ratio (HIPR) emulsion, contain the reaction product of the polyurethane prepolymer (as the dispersed phase) and water (as the continuous phase). When present, the chain extender and/or surfactant appear in the continuous phase. The use of HIPR process renders certain advantages to PUDs, most particularly the ability to produce high stability dispersions at high loadings from prepolymer formulations that are relatively hydrophobic and difficult to disperse in conventional bath processes.

Methods of preparing HIPR emulsions are known in the art. *See,* for example, U.S. Patent No. 6,087,440 as well as U.S. Patent No. 5,539,021. The dispersed phase of such emulsions exhibits close compact arrangement of spheres of generally equal radius and is characterized by a volume fraction as high as 0.99. The HIPR emulsion may be stabilized by the adsorption of surfactant from the continuous phase on the surface of the dispersed particulates.

For the purposes of this invention, the term "continuous phase liquid stream" is used to denote a flowing liquid in which colloidal polymer particles are dispersed. Similarly, the term "dispersed phase liquid stream" is used to denote a flowing liquid that becomes the dispersed phase. For the purposes of this specification, the term "liquid" is used to mean a homogeneous solution that can be pumped through a conduit. The liquid may be neat (that is, a liquid at room temperature) as well as molten (that is, a liquid at a temperature above room temperature).

The HIPR emulsions are prepared by continuously merging a continuous phase liquid stream having a flow rate $r_1$ and a disperse phase liquid stream having a flow rate $r_2$; and mixing the merged streams at a mixing rate sufficient to form the HIPR emulsion. The continuous phase and disperse phase liquid streams are sufficiently immiscible with each other to be emulsifiable. Polydispersity ("PDI") of emulsions defines the number of species per unit of the mixture. The PDI of the HIPR emulsion is generally less than 2.0. For the purposes of this invention, the term "polydispersity" is the ratio of volume and number averages and is defined as:

$$PDI = \frac{d_v}{d_n} = \frac{\left[\dfrac{\Sigma n_i d_i^3}{\Sigma n_i}\right]^{1/3}}{\left[\dfrac{\Sigma n_i d_i}{\Sigma n_i}\right]}$$

wherein
number average particle size distribution

$$d_n = \frac{\Sigma n_i d_i}{\Sigma n_i}$$

volume average particle size distribution

$$d_v = \left[\frac{\Sigma n_i d_i^3}{\Sigma n_i}\right]^{1/3}$$

weight average particle size distribution

$$d_w = \frac{\Sigma n_i d_i^4}{\Sigma n_i d_i^3}$$

surface average particle size distribution

$$d_s = \frac{\Sigma n_i d_i^3}{\Sigma n_i d_i^2}$$

where $d_n$ is the number average particle size, $n_i$ is the number of particles of diameter $d_i$.

Low PDI (less than 2.0) is an indication of narrow particle size distribution, and ability to control particle formation in a dispersion by a polymerization process. It further is a function of the particle size of the polyurethane prepolymer dispersed in the water phase. Thus, the total solids content of the polyurethane dispersions of the invention can be controlled by the particle size and polydispersity index (PDI) of the polyurethane particles. A PDI of 1.0 is an indication of monodispersed polymeric particles. The polydispersity of the polyurethane particles in the invention typically ranges from 1.0 to 2.0, most preferentially 1.1 to 1.5.

The HIPR emulsions of the invention are formed by continuously merging, in the optional presence of an emulsifying and stabilizing effective amount of surfactant and/or chain extender, a first stream containing water flowing at a rate $r_1$, together with a second stream containing the polyurethane prepolymer flowing at a rate $r_2$ under reaction conditions sufficient to form a polyurethane dispersion wherein the ratio of $r_2$:$r_1$ is not greater than 65:35, preferably not greater than 60:40, further preferably not greater than 55:45, and most preferably not greater than 50:50.

The continuous and the disperse phase liquid streams are sufficiently immiscible to form a stable HIPR emulsion.

Generally, higher surfactant concentrations result in smaller diameter particles, but surfactant concentrations that are too high tend to deleteriously affect the properties of products, such as films, made from the emulsion. When present, the surfactant concentration is sufficient to form an emulsion and subsequently stabilize it, and is preferably in the range of 0.1, more preferably 0.5, and most preferably 2, to 8, more preferably to 6, and most preferably 4 weight percent based on the weight of the dispersed phase.

Although it is possible to first dissolve the prepolymer in a solvent prior to forming the high internal phase ratio (HIPR) emulsion, it is preferred to prepare the HIPR emulsion in the substantial absence of a solvent, more preferably in the absence of a solvent. The inclusion of a solvent often adds an unnecessary expense to the manufacture of the end-use product as well as health and environmental concerns. In particular, solvent removal, when necessary to obtain acceptable physical properties of the product, is also an expensive as well as a time-consuming step.

The resulting dispersion has a particle size sufficient to make the dispersion stable. The dispersions of the present invention will have a particle size of from 50 to 1,000 nm., preferably from 0.07 to 0.5 and most preferably from 0.1 to 0.4 microns.

Once the HIPR emulsion reaches its destination for end use, the dispersion may be diluted with sufficient amounts of water such that the ratio of disperse phase to aqueous phase is less than 3:1, more preferably less than 2.5:1.

The alkylene oxide of the alkylene oxide polyol or polyamine is a polyoxyethylene polyol, polyoxyethylene polyamine, polyoxyethylenepropylene polyol or a polyoxyethylenepropylene polyamine. Where the polyoxyethylenepropylene polyamine or polyoxyethylenepropylene polyol is the preferred hydrophilic species, the weight ratio of oxyethylene to oxypropylene units in the polyol or polyamine is typically between from 20 to 100, preferably between from 75 to 100. The alkylene oxide moieties of the hydrophilic polyol or polyamine may be either randomly distributed or block distributed.

The hydrophilic alkylene oxide polyamine can be obtained from reductive amination of the corresponding polyol. In a preferred mode, hydrophilic polyamines are prepared in the form of blocks starting from an ethylene oxide diol whose chain ends are capped with small amounts of propylene oxide which could contain from 1 to 50 units. These can further be capped with an amine via reductive amination process.

Such hydrophilic polyols and polyamines are capable of reducing the interfacial tension between the polyurethane prepolymer and water to less than or equal to 10 dynes/cm, preferably below 5 dynes/cm. An interfacial tension of 10 dynes/cm or below is often required to bring the dispersibility of the polyurethane prepolymer in the aqueous media.

The hydrophilic alkylene polyol or polyamine may, in addition, be used as a chain extender due to their high water solubility. This is especially the case where the alkylene polyol is a diol.

The prepolymer may be prepared from any known aliphatic or aromatic organic polyisocyanate. These polyisocyanates include those containing at least two isocyanate groups per molecule, preferably, those containing an average of from 2.0 to 3.0 isocyanate groups per molecule. The polyisocyanates can be aromatic and/or aliphatic polyisocyanates and include the toluene diisocyanates, such as toluene di-isocyanate (TDI), diphenylmethane-4,4'-diisocyanate, xylylene di-isocyanate, naphthalene-1,5-diisocyanate, p-phenylene di-isocyanate, dibenzyl di-isocyanate, diphenyl ether diisocyanate, m- or p-tetramethylxylylene diisocyanate, triphenylmethane triisocyanate, methyl diphenyl isocyanate (MDI), and xylelene diisocyanate. Further, aliphatic diisocyanates (which further encompasses alicyclic diisocyanates) include those disclosed in U.S. Patent No. 5,494,960, such as hydrogenated tolylene diisocyanate, hydrogenated MDI, hydrogenated diphenylmethane-4,4'-diisocyanate, 1,4-tetramethylene diisocyanate, hexamethylene diisocyanate such as 1,6-hexamethylene diisocyanate and trimethylene hexamethylene diisocyanate, hydrogenated xylylene diisocyanate, cycrohexyl-1, 4-diisocyanate, and isophorone diisocyanate as well as bis-(isocyanato methylcyclohexane) and mixtures thereof. The organic polyisocyanates and the isocyanate reactive compounds include those reacted in such amounts that the isocyanate index, defined as the number or equivalents of NCO groups divided by the total number of isocyanate reactive hydrogen atom equivalents multiplied by 100 is generally between 50 and 120 and preferably between 75 and 110. In addition the polyisocyanate may be made up of one or more kinds of any of the referenced isocyanate monomer units.

The high molecular weight active-hydrogen containing material for use in the polyurethane prepolymer is preferably a saturated aliphatic or aromatic polyol. Generally, such high molecular weight active-hydrogen containing material may be considered as hydrophobic. Typically, such active-hydrogen containing materials have a weight average molecular weight between from 1,000 to 4,000, preferably 1,500 to 3,500, most preferably around 2,000. Such materials further may be characterized as having a water solubility of generally less than 10.0 g per 100 g of water at 25° C, preferably a water solubility of less than 2.0 g per 100 g of water at 25° C.

Suitable polyols include a diol, triol, as well as other active hydrogen-containing material based on a polyester or a polyether. Preferred are polyhydric alcohols, polyurethane polyols, acrylic polyols, polyester polyols, lactone-modified polyester polyols, polyester amide polyols, alkyd polyols, polycarbonate polyols, polyacetal polyols, polyolefin polyols, epoxy-modified polyols, silicone polyols, and fluorocarbon polyols

The polyols include polyhydric alcohols having from 10 to 100 carbon atoms. They further may be substituted with hydrophilic ethylene oxide groups. In a preferred embodiment, the polyhydric alcohol (preferably a linear or branched polyoxypropylene or poyoxybutylene polyol) is capped with from 0 to 25 percent ethylene oxide. Further, in the preferred embodiment of the invention, the ethylene oxide is block or randomly distributed within the high molecular weight active-hydrogen containing material.

Exemplary of the high molecular weight active-hydrogen containing material are a polyether polyol, a modified polyether polyol, a polythiol, polythioether polyol, or a hydroxy-functional polyether or polyester. These include, for example, polyalkylene polyethers having at least one hydroxyl group, preferably, polyalkylene polyether polyols. These polyethers include the polymerization products of oxiranes or other oxygen-containing heterocyclic compounds, such as tetramethylene oxide prepared in the presence of a catalyst and/or initiated by water. Polyether polyols further include polyether glycols such as polyoxyethylene glycol, polyoxypropylene glycol, polyoxybutylene glycol, polyoxyethylene polyoxytetramethylene glycol, polyoxypropylene polyoxytetramethylene glycol or polyoxyethylene polyoxypropylene polyoxytetramethylene glycols. In a preferred mode, the polyether diol component is a linear or branched polyoxypropylene polyol or a polyoxybutylene polyol. In a most preferred embodiment, between from 75 to 100 weight percent of the high molecular weight active-hydrogen material are polyoxypropylene or polyoxybutylene units and include polyoxyalkylene glycols such as polyoxypropylene or polyoxybutylene glycol having ethylene oxide capping from 0 to 25 weight percent

Suitable polyether polyols are obtained in known manner by the reaction of starting compounds which contain reactive hydrogen atoms with alkylene oxides such as ethylene oxide, propylene oxide, butylene oxide, styrene oxide, tetrahydrofuran, epichlorohydrin or mixtures of these alkylene oxides. It is preferred that the polyethers do not contain more than 10 percent by weight of ethylene oxide units. Most preferably, polyethers obtained without the addition of ethylene oxide are used. Suitable starting compounds containing reactive hydrogen atoms include the polyhydric alcohols set forth for preparing the polyester polyols and, in addition, water, methanol, ethanol, 1,2,6-hexane triol, 1,2-4 butane triol, trimethlol ethane, penaerythritol, mannitol, sorbitol, methyl glycoside, sucrose, phenol, isononyl phenol, resorcinol, hydroquinone, 1,1,1-or 1,1,2-tris(hydroxylphenyl)-ethane.

Tri- or more functional polyether polyols may further be used. These may be obtained by ring-opening polymerization of ethylene oxide, propylene oxide, tetrahydrofuran, ethyl glycidyl ether, propyl glycidyl ether, butyl glycidyl ether, phenyl glycidyl ether, allyl glycidyl ether, etc. as well as a triol such as glycerine.

Suitable polyester polyols include reaction products of polyhydric, preferably dihydric alcohols to which trihydric alcohols may be added and polybasic, preferably dibasic carboxylic acids. Instead of these polycarboxylic acids, the corresponding carboxylic acid anhydrides or polycarboxylic acid esters of lower alcohols or mixtures thereof may be used for preparing the polyesters. The polycarboxylic acids may be aliphatic, cycloaliphatic, aromatic and/or heterocyclic and they may be substituted, for example, by halogen atoms, and/or unsaturated. The following are mentioned as examples: succinic acid; adipic acid; suberic acid; azelaic acid; sebacic acid; phthalic acid; isophthalic acid; trimellitic acid; phtalic acid anhydride; tetrahydrophthalic acid anhydride, hexahydrophthalic acid anhydride, tetrachlorophthalic acid anhydride, endomethylene tetrahydrophthalic acid anhydride; glutaric acid anhydride; maleic acid; maleic acid anhydride; fumaric acid; dimeric and trimeric fatty acids such as oleic acid, which may be mixed with monomeric fatty acids; dimethyl terephthalates and bis-glycol terephthalate. Suitable polyhydric alcohols include, for example ethylene glycol; propylene glycol-(1,2) and -(1,3); butylene glycol-(1,4) and -(1,3); hexanediol-(1,6); octanediol-(1,8); neopentyl glycol; cyclohexanedimethanol (1,4-bis-hydroxymethylcyclohexane); 2-methyl-1,3-propanediol; 2,2,4-trimethyl-1, 3-pentanediol; triethylene glycol; tetrathylene glycol; polyethylene glycol; dipropylene glycol; polypropylene glycol; dibutylene glycol and polybutylene glycol, glycerine and trimethyolpropane. The polyesters may also contain a portion of carboxyl end groups. Polyesters of lactones, for example ξ-caprolactone or hydroxycarboxylic acids, for example ω-hydroxycaproic acid, may also be used. Preferred are polyester polyols having a hydroxy equivalent weight of 750 to 3,000.

The polyester polyol has a carboxyl group remaining in the molecule and typically is obtained by co-condensation between at least one of the above-mentioned polyhydric alcohols and a polycarboxylic acid. Typical examples of the polycarboxylic acid are succinic acid, adipic acid, sebacic acid, azelaic acid, phthalic acid, tetrahydrophthalic acid, hexahydrophthalic acid, maleic acid, fumaric acid, citraconic acid, itaconic acid, glutaconic acid, 1,2,5-hexatricarboxylic acid, and 1,4-cyclohexanedicarboxylic acid.

Tri- or more functional polyester polyols may further be used such as those obtained by co-condensation between a triol as polyhydric alcohol and a dicarboxylic acid or between a diol and a tricarboxylic acid such as 1,2,4-benzenetricarboxylic acids, 1,2,5-benzenetricarboxylic acid, 1,2,4-cyclohexanetricarboxylic acid, and 2,5,7-naphthalenetricarboxylic acid.

The mol ratio of active-hydrogen containing material: polyisocyanate is between from 1:2 to 1:6, preferably between from 1:2 to 1:3. The mol ratio of active-hydrogen containing high molecular weight material:low molecular weight hydrophilic ethylene oxide polyol in the prepolymer is between from 1 to 50, preferably from 5 to 20. Typically, the combination of the high molecular weight active-hydrogen containing material and hydrophilic ethylene oxide polyol comprises from 50 to 90 weight percent of the prepolymer.

The resulting weight average molecular weight of the prepolymer is less than or equal to 10,000 g/mole.

Although water can be used as a chain-extending agent, other chain-extending agents such as aliphatic, cycloaliphatic, aromatic polyamines, and alcohol amines, are preferred for building of molecular weight. Therefore, it is preferred that the prepolymer be contacted with the preferred chain-extending reagent before substantial reaction takes place between water and the prepolymer, and it may be desirable to dilute the HIPR emulsion concentrate with a solution containing water and the preferred chain-extending reagent, or water and concomitant addition of the preferred chain-extending reagent. A difunctional amine chain extender is preferred including aminated polyether diols; piperazine, including aminoethylethanolamine, ethanolamine, ethylenediamine and mixtures thereof. The weight ratio of water reacted with the prepolymer and the optional amine is from 1:10 to 10:1. Any isocyanate reactive diamine or amine having another isocyanate reactive group and a molecular weight of from 60 to 450 can further be used.

In addition to chain extenders, one or more surfactants may be included in the water phase. The surfactant may be anionic, ionic, cationic or zwitterionic or a mixture of monionic with cationic, anionic or zwitterionic. Preferred are nonionic and anionic surfactants. The surfactant, which is not incorporated into the polymer backbone, is selected from the group consisting of metal or ammonia salts of sulfonates, phosphates and carboxylates. Suitable surfactants include alkali metal salts of fatty acids such as sodium stearate, sodium palmitate, potassium oleate, alkali metal salts of fatty acid sulfates such as sodium lauryl sulfate, the alkali metal salts of alkylbenzenesulfones and alkylnaphthalenesulfones such as sodium dodecylbenzenesulfonate, sodium alkylnaphthalene-sulfonate; the alkali metal salts of dialkyl-sulfosuccinates; the alkali metal salts of sulfated alkylphenol ethoxylates such as sodium octylphenoxypolyethoxyethyl sulfate; the alkali metal salts of polyethoxyalcohol sulfates and the alkali metal salts of polyethoxyalkylphenol sulfates. More preferably, the anionic surfactant is sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, or sodium hexyl diphenyl oxide disulfonate, and most preferably, the anionic surfactant is sodium dodecyl benzene sulfonate. Preferred nonionic surfactants are ethylene oxide adducts of phenols, such as nonyl phenol. When present, the surfactant typically contains from 0.1 to 6 weight percent of the polyurethane dispersion, most preferably from 0.5 to 4 weight percent. In general, it is desired to add a sufficient amount of surfactant so as to render a dispersion having an average particle size wherein 50 and 1000 nm and a polydispersity of from 1.0 to 2.0. Further, if the prepolymer is self-emulsifying by inclusion of emulsifying nonionic, cationic, or anionic groups, then an external surfactant may or may not be necessary.

Surfactants, either internally or externally added, play an important role in the formation and stabilization of emulsions, suspension, latexes and dispersions. Generally, higher surfactant concentrations result in smaller diameter particles, but surfactant concentrations that are too high tend to deleteriously affect the properties of products such as films prepared from the HIPR emulsion. A person of ordinary skill in the art can readily determine the appropriate surfactant type and concentration for the particular process and end use.

Other optional additives, such as phase modifiers, may further be included in the water during the preparation of the polyurethane. Colloidal stability of the polyurethane dispersion may be enhanced by including with the water from 0.5 to 8 percent of a protective colloid, such as poly(vinyl alcohol), or an anionic surfactant. Their choice is not an essential feature of the present invention with the proviso that, when used, they be non-allergenic when their remnants are present in dry films. This condition is satisfied by practically all of these types of ingredients which are used in the current industrial practice of paints, coatings, textile and paper finishes, adhesives and sealants. In addition, the polyurethane may be prepared with the presence, in water, of polymer phase modifiers. Such polymer phase modifiers impart desired physical properties to the cured product as well as wetting agents to facilitate film formation and thickeners. Such phase modifiers are typically in the amount of from 0.1 to 5 weight percent of the polyurethane dispersion. Thickeners such as ammonium alginate and methyl cellulose which give desirable flow characteristics; fillers such as clays, carbon black and colloidal silica and talc to modify tensile, abrasion and tear properties; dyes and pigments; antidegradants; and softeners such as mineral oil to control modulus may be employed.

Any other additive which is known to those of ordinary skill in the end-use to which the inventive polyurethane dispersions are applied can be used so long as their presence does not degrade the desired properties of the end-use product. Such additives can be incorporated into the dispersions in any way known to be useful including, but not limited to inclusion in the prepolymer formulation and inclusion in the water used to make the dispersion.

Suitable additives include titanium dioxide when colored films is the intended end-use. Other useful additives include calcium carbonate, silicon oxide, defoamers, biocides, carbon particles. A special embodiment of the present invention provides surgical gloves pigmented with titanium dioxide, carbon black or other suitable pigments to render them opaque to ultraviolet radiation. Such gloves can be sterilized on the hands of the health care givers by a brief exposure to ultraviolet radiation in an especially devised box.

In addition, exam, surgical, clean room, food handling, and even industrial gloves, produced from the polyurethane dispersions of the invention may be "powder free" by introduction of a layer of talcum powder, corn starch, or the like, to keep the polymer from adhering to itself, thereby making it easier to put on the gloves. The article can further be made self releasing by inclusion of a wax in the prepolymer formulation. Preferably the wax is carnauba wax. The wax is selected such that the glove will not induce an allergic reaction to the skin. Therefore, food grade waxes are particularly preferred for this application. When used, the waxes are preferably included in the water used to disperse the prepolymer formulation at a concentration of from 0.1 to 2 weight percent.

The dispersions of the invention may further contain a low molecular weight active-hydrogen containing polyoxyalkylene diol which serve to increase the number of urea or urethane linkages in the prepolymer. Preferred diols include diethylene glycol, dipropylene glycol, polyoxypropylene diol as well as polyester polyols. Those having hydroxy equivalent weight of less than 300 are especially preferred. This in turn improves the mechanical properties (ultimate tensile strength, stress @ 100 percent elongation, modulus, and ultimate elongation) of the elastomer. When present, up to 20 percent by weight of the polyurethane dispersion may contain such polyoxyalkylene diol. Suitable polyoxyalkylene diols include diethylene glycol (DEG), dipropylene glycol (DPG), and polyoxypropylene diol of weight average molecular weight less than 500. When employed, the low molecular weight active hydrogen containing polyoxyalkylene diol is present in the dispersion in amounts of from 0 to 10, preferably from 2 to 6.

The amount of polyurethane solid content in the polyurethane dispersion of the invention is maximized without gelation and destabilization. This is attributed to the inclusion of the hydrophilic alkylene oxide polyol or polyamine. Further, the inclusion of the alkylene oxide polyol or polyamine helps to ease the dispersibility of the prepolymer and also helps to control the particle size of the polyurethane particles in the dispersion. This lowers the need to use high surfactant concentrations for the dispersion and stabilization. The volume average particle size of the reaction product of the PUD of the invention is between from 50 to 1000 nm, preferably from 100 to 400 nm. In addition, the presence of the alkylene oxide polyol or polyamine decreases the dependency of aqueous polyurethane dispersions on the type and amount of surfactants. In addition, the incorporation of hydrophilic alkylene oxide polyol or polyamine attributes to the storage, high shear, and process stability of the aqueous dispersion produced from such polyurethane prepolymer. It may further help to improve the pH, electrolyte, and/or freeze thaw stability of the dispersion.

In addition to having submicron sized particles, the dispersions of the invention have a high solids content. Typically, the weight percentage of polyurethane in the polyurethane aqueous dispersion of the invention is typically from 45 to 60 weight percent, preferably 45 to 55 weight percent. Such dispersions are most desirably stored and shipped at as high a solids content as possible to minimize storage volume and shipping costs. The dispersions can desirably be diluted prior to final use. The stability of the dispersion is sufficient to prevent the dispersion from coagulating under storage or shipping and high shear conditions, but not, so stable that the polymer cannot be coagulated onto a substrate to prepare a film via electrolytic coagulation.

Moreover, the present invention also allows one to create very high shear stable dispersion with excellent stability against electrolytes. These can be provided by the use of nonionic or nonionic/anionic surfactant blends for the stabilization of the particles. The dispersions of the present invention can be used in many other applications such as coatings, adhesives, elastomers and sealants by various methods, such as electrodeposition, vapor deposition, thermal etc.

The dispersions of the invention exhibit high shear Stability as evidenced by an increase in viscosity with no observable coagulation or change in particle size. Typically, the dispersion has a viscosity less than or equal to 200,000 cps at 10 rpm, preferably less than 20,000 cps. The dispersions even at high solids and high viscosities remain stable and can be diluted to lower solids content and lower viscosities. Polyurethane dispersions containing the reaction product of water and a prepolymer derived from a polyol wherein the amount of hydrophilic ethylene oxide in the polyol is 6.0 weight percent gels at 48 percent (molecular weight of the polyol is 1000) and 49 percent (molecular weight of the polyol is 900). On the other hand, where the molecular weight of the polyol is 900 and wherein the amount of hydrophilic ethylene oxide polyol is 4 percent, the polyurethane dispersion may contain 60 percent solids before the viscosity of 200,000 cps is attained. At this level, the dispersion is a highly viscous dispersion but is still liquid and dilutable to lower solids and viscosities, if desired. These dispersions may be prepared to have low viscosities at high solid loadings For instance, it is possible to obtain dispersions containing approximately 60 weight percent solids with lower viscosities by lowering the overall hydrophilic alkylene oxide content in the polyol as well as lowering the particle size of the particulates in the dispersion. For instance, polyurethane dispersions of low viscosity (such as 100 to 1,000 cps) and containing approximately 60 weight percent solids can be obtained by the use of approximately 2 weight percent of a linear polyoxyethylene diol having a molecular weight of 1,000.

In addition to the manufacture of medical gloves, the present invention has applicability in protective gloves, condoms, medical bags, medical balloons such as angioplasty balloons, bellows, face masks, blood pressure cuffs. The present invention also has applicability in parts associated with drug delivery mechanisms, including catheters, medical tubing, gaskets and o-rings. Moreover, the present invention has applicability in many non-medical items, such as, for example, non-medical gloves, swim caps, tool handle grips, industrial caps and plugs, windshield wiper boots, toy balloons, toys, electrical parts, covers and gaskets.

Since the polyurethane dispersions of the invention are resilient, that is they are able to return their original shape once deformed, they have particular applicability in the manufacture of disposable gloves such as surgical gloves. In addition, products prepared from the polyurethane dispersions of the invention are much more stable to heat, radiation and oxidation than films based on natural rubber. The novel films maintain their original properties under conditions where natural rubber films become embrittled and discolored. This is a significant advantage for efficient sterilization of surgical gloves.

The aqueous PUD of this invention can be used to prepare laminates, carpet backed substrates, films, adhesives, coatings, sealant, foams, tubings, pipings or shaped articles. These dispersions can also be advantageously blended with other latexes, fillers etc to form composite materials. Any means known in the art for making such articles from PUDs may be employed. See, for example, WO 98/41554.

When desired for use as a film, the polyurethane dispersions of the invention may be prepared by casting or by thermal or chemical coagulation. The medical devices of the present invention are preferably produced either by dipping molds or mandrels of the desired product (former) into the above-described polyurethane dispersion as dipping bath with a coagulant. Alternatively, the mold may be coated with coagulant prior to dipping the mold into the dipping bath. As the mold is withdrawn, it becomes covered by a layer of aqueous polymer having the coagulant impinged upon the film. Multiple dipping is optional. The coagulated film after washing with water is often dried slowly to remove undesired water.

Suitable coagulants are divalent cationic metal salt such as those of Groups I, II, and III. Preferred is calcium nitrate. More preferably, the amount of coagulant is in a range of 30 percent to 45 percent of the total dipping bath. The coagulating agent most preferably comprises aqueous based calcium nitrate having a solids content of 60 percent to 70 percent by weight of the raw material. Other divalent cationic metals salts such as, for example, calcium chloride, zinc nitrate, zinc chloride, magnesium acetate, magnesium nitrate, aluminum nitrate and aluminum sulphate may be used individually or in combination with the calcium nitrate.

The emulsions of the present invention can further be used in casting applications where emulsion stability is not as critical. Films are often prepared by methods that include thermal and chemical coagulation. During these processes, a dispersion at the surface of a substrate is destabilized and the polymer coalesces onto the substrate forming a film. If the dispersion is so stable that it cannot be readily coagulated onto the substrate, it is not useful for forming films. On the other hand, if the dispersion is so unstable that it coagulates during storage or on shipping, it is also not useful for forming the films of the present invention.

In an alternative process, the former is first preheated in an oven. The former is then dipped into a coagulation bath. After withdrawing the former from the bath, the former with the coagulant deposited on it is dried in an oven. The former bearing the dried coagulant layer is then dipped into the above-described polyurethane dispersion. The former bearing the film is then removed from the dipping bath and again dried in an oven. The film is optionally leached in a hot water bath. The former bearing the film is then dipped into a powder slurry or a polymer coating bath. The former is then withdrawn from the bath and the composite film deposited on the former is cured in an oven. The product is then stripped from the former.

From the foregoing, it will be observed that numerous variations and modifications may be effected without departing from the true spirit and scope of the novel concepts of the invention. The following non-limiting examples, and comparative demonstrations, bring out the more salient features of this invention. All parts are given in terms of weight units except as may otherwise be indicated.

Examples

Unless otherwise noted, all percentages are expressed in terms of weight average molecular weight. The following materials are used in the examples below:

Polyether Polyol is a 2000 molecular weight polyoxypropylene diol having total of 12.5 percent ethylene oxide end capping (6.25 at each end), sold commercially under the tradename Voranol 9287, a product of The Dow Chemical Company.

Polyester polyol is Tone® 2241, 1241 caprolactone polyol having a molecular weight of 2000 /mole by The Dow Chemical Company.

Low Molecular Weight Diol is a 425 molecular weight all polyoxypropylene diol, sold commercially under the tradename P425, a product of The Dow Chemical Company.

Low Molecular Weight Monol is a 950 molecular weight all polyoxyethylene monol sold commercially under the trade name MPEG 950, a product of The Dow Chemical Company.

Polyisocyanate A is MDI having a 4,4' isomer content of 98 percent and an isocyanate equivalent weight of 125, sold commercially under the tradename ISONATE™ 125M, a product of The Dow Chemical Company.

Polyisocyanate B is a 50:50 MDI mixture of MDI having a 4,4' isomer content and a MDI having a 2,4' isomer content and an isocyanate equivalent weight of 50, sold commercially under the tradename Isonate 50 op, a product of The Dow Chemical Company.

Polyisocyanate C is an aliphatic isocyanate Isophorone Diisocyanate (IPDI) sold commercially under the trade name VESTANAT IPDI, a product of Creanova, Inc.

Polyisocyanate D is an aliphatic isocyanate hydrogenated 4,4 diisocyanato-dicyclohexylmethane (H12MDI) sold commercially under the trade name H12MDI, a product of Bayer Corp.

Polyisocyanate E is a 55:45 mixture of 1,3-bis-(isocyanato methylcyclohexane) and 1,4-bis-(isocyanato methylcyclohexane), respectively, a product of Dow Chemical Company.

E-900 is a linear polyoxyethylene diol having a molecular weight of 900 g/mole, a product of The Dow Chemical Company.

E-1000 is a linear polyoxyethylene diol having a molecular weight of 1,000, a product of The Dow Chemical Company.

E-1500 is a linear polyoxyethylene diol having a molecular weight of 1,000, a product of The Dow Chemical Company.

Polyamine A-1000 is a linear polyoxypropylene diamine or polyoxypropyleneethylene diamine having a molecular weight of 1000, capped with amine at both ends.

Rhodacal™ LDS-22 is an anionic surfactant, and constitutes a 22 percent aqueous solution of linear sodium dodecylbenzenesulfonate, a product of Rhodia.

Bioterge AS-40 is an anionic surfactant comprising sodium alpha-olefin sulfonate, a product of Stephan Co.

Triton X-405 is a nonionic surfactant, a product of The Dow Chemical Co.

DeSULF™ TIPA DBS 25 surfactant is a 25 percent aqueous solution of triisopropanolamine dodecylbenzenesulfonate, a trademark of DeForest Enterprises.

The dispersions prepared were characterized in terms of their particle size and particle size distribution, surface tension, and shear and shelf stabilities as follows: Particle Size and Particle Size Distribution. Dynamic light scattering (COULTER LS230) was used to measure the particle size and particle size distribution of the polyurethane dispersions. Samples withdrawn during and after the dispersion process were diluted and loaded into COULTER LS230, which was calibrated prior to sample measurement.

Solids Content. The solids content of the dispersions was measured by a IR-200 Moisture Analyzer (Denver Instrument Company). This method is basically based on removal of the volatile component (water) from the dispersion and gravimetric determination of the amount of non-volatile content (PU).

Viscosity. The viscosities of the PUDs were then measured using a Brookfield LVF viscometer equipped with a spindle No. 6 at 25°C.

Interfacial Tension. Interfacial tension of prepolymers were measured using a drop tensiometer TRACKER™, a product of Thetadyne Inc.

Shear and Shelf Stability test. Shear stabilities of the dispersions were measured by using a Hamilton beach mixer where 200 g of PUD is placed into a stainless steel cup and sheared in high speed (2000 rpm) until the dispersion loses its consistency. Time to lose consistency is used to describe shear stability. For shelf stabilities, a small amount of PUD was placed into glass vials and placed on a shelf undisturbed for period of weeks to observe any precipitation and particle size change.

Comparative Examples 1-4: Examples 1-4 are control experiments without ethylene oxide diol using 5.5 and 2.5 weight percent surfactant and different surfactants.

Comparative Example 1. To prepare a polyurethane prepolymer, 29.1 g of Polyisocyanate A, 4.2 g Polyisocyanate B, 52.0 g of Polyether Polyol and 14.7 g Low Molecular Weight Diol were added to a flask and stirred for 4 hours at 90° C. Free -NCO content of the prepolymer was measured to be 6.01 percent with a viscosity of 39,400 cps. Interfacial tension of this prepolymer was higher than 10 dynes/cm. The prepolymer was cooled down to room temperature and was mixed with 25 grams (5.5 weight percent based on solid) of sodium dodecyl benzene sulfonate surfactant (22.0 weight percent active) and 20 grams of deionized water while mixing vigorously at 3000 rpm with a high shear mixer equipped with a 2.74 inches Cowles blade. 88 grams of deionized water were slowly added into this initial high internal phase (HIPE) while shear was continued. The final dispersion was filtered to remove possible aggregates (no visible aggregates were noticed). Total solid was measured as 45.2 weight percent. Volume average particle size was measured using dynamic light scattering as 220 nm with a PDI of 2. The dispersion had a poor shear stability less than 2 min.

Comparative Example 2. Example 1 was repeated in its entirety except that 11.4 grams 2.5 weight percent of sodium dodecyl benzene sulfonate (22.0 weight percent active) was employed as surfactant. Total solid was measured 44.5 weight percent. Volume average particle size was measured using dynamic light scattering as 367 nm with a PDI of 1.8. The dispersion had a poor shear stability less than 30 min.

Comparative Example 3. Example 1 was repeated in its entirety except that a different surfactant was used. 5.5 weight percent (based on solid content) of Bioterge AS-40 was used. A bimodal dispersion was obtained and phase separated on the shelf after 4 hours. Shear stability could not be measured.

Comparative Example 4. Example 1 was repeated in its entirety except that 5.5 weight percent (based on solid content) of sodium lauryl sulfate (SLS) surfactant was used. A bimodal dispersion was obtained and the phase separated on the shelf.

Examples 5-9 demonstrate the effect of the alkylene oxide with surfactants.

Examples 5-9. Examples 5-9 used varying amounts of ethylene oxide (E-1000)

Example 5. A polyurethane prepolymer was prepared admixing 29 g of Polyisocyanate A, 4.0 g Polyisocyanate B, 50.0 g of Polyether Polyol and 12.0 g Low Molecular Weight Diol and 5.0 percent E-1000 into a flask and stirred for 4 hours at 90° C. Free -NCO content of the prepolymer was measured to be 6.05 percent with a viscosity of 38,000 cps. Interfacial tension of this prepolymer was lower than 2.5 dynes/cm. The prepolymer was cooled down to room temperature and was mixed with 18.08 (4.0 weight percent based on solid content) grams of sodium dodecyl benzene sulfonate surfactant (22.0 weight percent active) and 20 grams of deionized water while mixing vigorously at 3000 rpm with a high shear mixer equipped with a 2.74 inches Cowles blade. 88 grams of deionized water were slowly added into this initial high internal phase (HIPE) while shear was continued. The final dispersion was filtered to remove possible aggregates (no aggregates were seen). Total solids were measured to be 46.0 weight percent. Volume average particle size was measured using dynamic light scattering as 146 nm with a PDI of 1.2. The dispersion had excellent shear stability and did not coagulate despite the increase in the viscosity. As such, the dispersions of the invention may be shipped and transported at high polyurethane concentrations. Example 6. Example 5 was repeated except that 4.0 weight percent (based on solids content) of Bioterge AS-40 surfactant was used. A bimodal dispersion was obtained and phase separation occurred after 4 hours on the shelf. The total solids were measured to be 45.9 weight percent The volume average particle size was measured using dynamic light scattering as 189 nm with a PDI of 1.4. The dispersion had excellent shear stability and never coagulated despite an increase in the viscosity.

Example 7. Example 5 was repeated except that 4.0 weight percent (based on solids content) of sodium lauryl sulfate (SLS) surfactant was used. A polyurethane dispersion with a monodisperse particle size was obtained and phase separation occurred after 4 hours on the shelf. The total solids were measured to be 45.9 weight percent Volume average particle size was measured using dynamic light scattering as ~200 nm with a PDI of 1.6. The dispersion had very good shear stability and never coagulated despite the increase in the viscosity.

Example 8. Example 5 was repeated except that 4.0 weight percent (based on solids content) of ethoxylated nonyl phenol surfactant, commercially available as Triton X405, was used. A polyurethane dispersion with a monodisperse particle size was obtained and phase separation occurred after 4 hours on the shelf. The total solids were measured to be 45.9 weight percent. The volume average particle size was measured using dynamic light scattering as ~ 240 nm with a PDI of 1.4. The dispersion had excellent shear stability and never coagulated despite an increase in viscosity.

Example 9. Example 5 was repeated except that 2.0 weight percent (based on solids content) Triton X405 and 2.0 weight percent Rhodacal-LDS-22 surfactant was used. A polyurethane dispersion with a monodisperse particle size was obtained and phase separation occurred ed after 4 hours on the shelf. The total solids were measured to be 45.9 weight percent The volume average particle size was measured using dynamic light scattering as 220 nm with a PDI of 1.3. The dispersion had excellent shear stability and never coagulated despite the increase in the viscosity.

Examples 10-13 demonstrate the effect of surfactant concentration on the PUD.

Example 10. Polyurethane dispersion containing polyurethane having lower ethylene oxide diol (2.0 weight. percent).

A polyurethane prepolymer was prepared by admixing 31.0 g of Polyisocyanate A, Polyisocyanate B, 63.0 g of Polyether Polyol, 4.0 g dipropylene glycol (DPG) and 2.0 percent E-1000 in a flask and stirred for 4 hours at 90° C. Free -NCO content was measured to be 5.2 percent with a viscosity of 73,500 cps. The prepolymer was cooled down to room temperature and was mixed with 18.08 (4.0 weight percent based on solid content) grams of sodium dodecyl benzene sulfonate surfactant (22.0 weight percent active) and 20 grams of deionized water while mixing vigorously at 3000 rpm with a high shear mixer equipped with a 2.74 inches Cowles blade. 88 grams of deionized water were slowly added into this initial high internal phase (HIPE) while shear was continued. The final dispersion was filtered to remove possible aggregates (no aggregates were seen). The total solids were measured to be 46.0 weight percent The volume average particle size was measured using dynamic light scattering as 146 nm with a PDI of 1.3. The dispersion had excellent shear stability and never coagulated despite an increase in viscosity.

Examples 11-13. Polyurethane dispersion containing a polyurethane prepolymer having lower ethylene oxide diol (2.0 weight percent) and lower surfactant concentrations (2.5. 1.5, 1.0 weight percent)

Example 11. Example 10 was repeated except that 2.5 weight percent (based on solids content) of Rhodacal-LDS-22 anionic stabilizer was used. The total solids content was measured 45.0 weight percent The volume average particle size was measured using dynamic light scattering as 184 nm with a PDI of 1.2-1.3 and with a surface tension of 39.2 dynes/cm. The dispersion had excellent shear stability and never coagulated despite an increase in viscosity. The particle size did not change after the shear test was completed.

Example 12. Example 10 was repeated except that 1.5 weight percent (based on solids content) of LDS-22 anionic stabilizer was used. The Total solids were measured at 45.0 weight percent The volume average particle size was measured using dynamic light scattering as 368 nm with a PDI of 1.2-1.3. The dispersion had excellent shear stability and never coagulated despite an increase in the viscosity. The particle size did not change after the shear test was complete. The dispersion exhibited a surface tension of 41.0 dynes/cm. Example 13. Example 10 was repeated except that 1.0 weight percent (based on solids content) of Rhodacal-LDS-22 anionic stabilizer was used. The total solids were measured 45.0 weight percent. The volume average particle size was measured using dynamic light scattering as 483 nm with a PDI of 1.2-1.3 and with a surface tension of 41.8 dynes/cm. The dispersion had excellent shear stability and never coagulated despite an increase in the viscosity. The particle size did not change after the shear test was complete.

Examples 14-15 describe the production of PUDs having high solids.

Example 14. 100 g of prepolymer having the same composition as in Example 10 was prepared. It was converted into a high solid polyurethane dispersion by initially mixing with 20.8 (4.0 weight percent based on solid content) grams of sodium dodecyl benzene sulfonate surfactant (22.0 weight percent active) and 20 grams of deionized water while mixing vigorously at 3000 rpm with a high shear mixer equipped with a 2.74 inches Cowles blade. 48 grams of deionized water were slowly added into this initial high internal phase (HIPE) while shear was continued. The final dispersion was filtered to remove possible aggregates (no aggregates were seen). The total solids were measured at 57.7 weight percent. Volume average particle size was measured using dynamic light scattering as 140 mm.

Example 15. 100 g of prepolymer having the same composition as in Example 10 was prepared. It was converted into a high solid polyurethane dispersion by initially mixing with 11.4 (2.5 weight percent based on solid content) grams of sodium dodecyl benzene sulfonate surfactant (22.0 weight percent active) and 20 grams of deionized water while mixing vigorously at 3000 rpm with a high shear mixer equipped with a 2.74 inches Cowles blade. 30 grams of deionized water were slowly added into this initial high internal phase (HIPE) while shear was continued. The final dispersion was filtered and total solids were measured at 62.5 weight percent The particle size (volume average) was measured using dynamic light scattering as 187 nm. The dispersion was viscous as compared to low solid counterparts and extremely stable on shelf. The samples were diluted to 45 weight percent solids content and were extremely stable against high shear.

Examples 16-19 demonstrate that viscosity of a PUD is dependent on the type of alkylene oxide polyol in the prepolymer. In particular, these Examples demonstrate that a PUD of a prepolymer derived from a hydrophilic alkylene oxide polyol or polyamine having a molecular weight between 800 and 1500 wherein the amount of hydrophilic alkylene oxide polyol in the prepolymer is from 0.5 to 5.5 weight percent may exhibit higher loadings of polyurethane solids.

Example 16. 200 g of prepolymer (having the composition shown in Table I) was placed in a 32 oz glass bottle. The bottle was clamped and a 2.75 inches Cowles blade was inserted into the prepolymer such that the blade was just covered by the liquid prepolymer. Surfactant (Rhodacol-LDS-22) was diluted with a small fraction of deionized (DI) water (~ 10 percent of total water) and poured onto the prepolymer as the mixing was started. The surfactant was present in the amount of 3.0 weight percent of the PUDs. The rest of the water was added into the mixture slowly. Polyurethane dispersions were prepared from each polymer having different solids contents. Table II shows the viscosities of PUDs prepared with different levels and molecular weights of PEO diols at 50 weight percent solids.

Table I: Composition of prepolymers and percent NCO

| MDI (weight percent) | Polyol (V9287) (weight percent) | Exp. 16 E-900 (weight percent) | Ethylene oxide Exp. 17 E-1000 (weight percent) | Exp. 18 E-1500 (weight percent) | Percent NCO Measured |
|---|---|---|---|---|---|
| 25.75 | 68.25 | 6 | - | - | 5.13 |
| 25.25 | 70.75 | 4 | - | - | 5.05 |
| 25.5 | 68.5 | - | 6 | - | 5.09 |
| 25.4 | 70.6 | - | 4 | - | 5.14 |
| 25.1 | 68.9 | - | - | 6 | 5.11 |
| 25 | 75 | - | - | 4 | 5.11 |

Table II: Comparison of viscosities and particle size and PUDs prepared using various amounts of PEO diols having various molecular weights.

| Exp. | PEO | Amount of PEO (weight percent.) | Particle Size | | 45 weight percent | Coagularity | 50 weight percent | Coagularity | 55 weight percent | Coagularity | 60 weight percent | Coagularity |
|---|---|---|---|---|---|---|---|---|---|---|---|---|
| | | | Dv (nm) | | | | | | | | | |
| 16 | E900 | 4 | 145 | 2700 | 400 | No | 2,700 | No | 48,000 | No | 210,000 | No |
| | | 4.5 | | | 15,00 | No | 38,000 | No | 74,500 | No | 300,000 | No |
| | | 5 | | | 17,400 | No | 46,000 | No | 185,000 | No | 300,000 | No |
| | | 5.5 | 102 | 62,200 | 32,800 | No | 62,200 | No | 190,000 | No | 300,000 | No |
| | | 6.0 | 121 | >>200,000 | 73,200 | No | Too viscous | Yes | Gel | Yes | 300,000 | Yes |
| 17 | E1000 | 4 | 103 | 33,900 | 500 | No | 2,700 | No | 48,000 | No | 185,000 | No |
| | | 4.5 | | | 8,920 | No | 28,800 | No | 68,100 | No | 185,000 | No |
| | | 5 | | | 20,500 | No | 32,500 | No | 185,000 | No | 190,000 | No |
| | | 5.5 | 92 | 77,300 | 45,700 | No | 77,300 | No | 190,000 | No | 200,000 | No |
| | | 6.0 | 107 | >>200,000 | 65,000 | No | Gel | Yes | Gel | Yes | 500,000 | Yes |
| 18 | E1500 | 4 | 119 | 14,800 | 20 | No | 14,880 | No | 58,900 | No | 200,000 | No |
| | | 4.5 | | | 2,090 | No | 16,880 | No | 180,000 | No | 300,000 | No |
| | | 5 | | | 6,720 | No | 80,000 | No | 300,000 | No | 300,000 | No |
| | | 5.5 | 125 | 150,000 | 3,600 | No | 150,000 | No | 300,000 | No | 300,000 | No |
| | | 6.0 | aggregated | Solid | 11,600 | No | Gel | Yes | Gel | Yes | 300,000 | Yes |

As shown in Table II, polyurethane dispersions using 6.0 weight percent of E-900, E-1000 and E-1500 had extremely high viscosities at 50 weight percent solids content and coagulated (gelled). PUDs with high solids content (55-60 weight percent) and viscosities < 200,000 cps were reproductively prepared from polyurethanes wherein the amount of hydrophilic alkylene oxide polyol was less than or equal to 5.5. PUDs wherein the amount of hydrophilic alkylene oxide polyol was 6.0 weight percent and having a solids content of 50 percent could not be prepared.

Examples 19-22 are directed to PUDs, derived from aliphatic diisocyanates and polyester polyols.

Example 19. A polyurethane prepolymer was prepared by admixing 29 g of Polyisocyanate A, Polyisocyanate B, 69.0 g of Polyether Polyol, and 2.0 percent Polyamine A in a flask and stirred for 4 hours at 90° C. Free -NCO content was measured to be 6.6 percent with a viscosity of 48,200 cps. The prepolymer was cooled down to room temperature and was mixed with 18.08 (4.0 weight percent based on solid content) grams of sodium dodecyl benzene sulfonate surfactant (22.0 weight percent active) and 20 grams of deionized water while mixing vigorously at 3000 rpm with a high shear mixer equipped with a 2.74 inches Cowles blade. 88 grams of deionized water were slowly added into this initial high internal phase (HIPE) while shear was continued. The final dispersion was filtered to remove possible aggregates (no aggregates were seen). The total solids were measured to be 46.0 weight percent. The volume average particle size was measured using dynamic light scattering as 172 nm. The dispersion had excellent shear stability and never coagulated despite an increase in viscosity.

Example 20. A polyurethane prepolymer was prepared by mixing 176 g of Polyisocyanate C, 576 g Tone 1241, a caprolactone diol, 16 g Low Molecular Weight Monol and 32 g of Polyol 1000 into a flask and mixed overnight at 90°C. Free -NCO content of the prepolymer was measured at 4.8 weight percent. The prepolymer was cooled to 65°C and mixed with 28.3 g of Rhodocal LDS-22 while mixing vigorously at 3000 rpm with a high shear mixer equipped with a 2.74 Cowles blade. 49 grams of piperazine were slowly added into this initial high internal phase while shear was continued. Total solids were measured to be 51 weight percent Volume average particle size was measured using dynamic light scattering as 210 nm with a PDI of 1.3. The viscosity was less than 600 cps.

Example 21. A polyurethane prepolymer was prepared by mixing 192 g of Polyisocyanate D, 560 g Tone 1241, a caprolactone diol, 16 g Low Molecular Weight Monol and 32 g of Polyol 1000 into a flask and mixed overnight at 90°C. Free -NCO content of the prepolymer was measured at 4.4 weight percent. The prepolymer was cooled to 65°C and mixed with 27.8 g of Rhodocal LDS-22 while mixing vigorously at 3000 rpm with a high shear mixer equipped with a 2.74 Cowles blade. 45 grams of piperazine and 140 g of water were slowly added into this initial high internal phase while shear was continued. Total solids were measured to be 50.5 weight percent. Volume average particle size was measured using dynamic light scattering as 280 nm with a PDI of 1.2 - 1.3. The viscosity was less than 500 cps.

Example 22. A polyurethane prepolymer was prepared by mixing 40.6 g of Polyisocyanate E, 143.4 g Tone 1241, a caprolactone diol, 4 g Low Molecular Weight Monol and 8 g of Polyol 1000 into a flask and mixed overnight at 90° C. Free -NCO content of the prepolymer was measured at 4.04 weight percent. The prepolymer was cooled to 65° C and mixed with 22.8 g of SLS while mixing vigorously at 3000 rpm with a high shear mixer equipped with a 2.74 Cowles blade. 45 grams of piperazine, a chain extending agent, and 140 g of water were slowly added into this initial high internal phase while shear was continued. Total solids were measured to be 49.8 weight percent Volume average particle size was measured using dynamic light scattering as 268 nm with a PDI of 1.3 - 2.0. The viscosity was less than 500 cps.

Example 23 is directed to the process for preparing high EO polyol PUDs.

Example 23. The prepolymer was prepared by combining polyether polyol (63.1 percent by weight), Polyosicyanate A (30.9 percent by weight), dipropylene glycol (4 percent by weight) and Carbowax™ 1000 (2 percent by weight, a trademark of The Dow Chemical Company).

The prepolymer was fed continuously at a rate of 1 kg/min through a first arm fitted to a first T. Rhodocal LDS22 surfactant was fed at a rate of 0.14 kg/min through a first arm of a second T and merged with a water stream flowing at a rate of 0.5 kg/min through a second arm of the second T. The water/surfactant stream was then passed through a second arm of the first T and merged with the prepolymer. The merged water/surfactant/prepolymer stream was fed to the input port of an IKA DR3-6 DISPAX™ REACTOR rotor stator instrument ( a trademark of IKA WORKS, Inc) operating at 2964 rpm.

The ratio of the feeds into the dispersing instrument were 60.8 weight percent prepolymer, 8.3 weight percent surfactant, and 30.9 weight percent water. The weight ratio of the aqueous to organic (including surfactant) was 0.52. The resulting stable poly(urethane/urea) latex was diluted with water to a solids content of 55.4, a volume average particle size of 0.537 micron as measured by a Coulter LS230 particle size analyzer.

Comparative Example 24. The prepolymer was prepared by combining Polyether Polyol (63.6 weight per cent), Polyisocyanate A (33.1 weight per cent), diethylene glycol (1.3 weight per cent) and a Low Molecular Weight Monol (2.0 weight per cent)

The prepolymer was fed continuously at a rate of 1 kg/min through a first arm fitted to a first T. DeSULF™ TIPA DBS 25 surfactant was fed at a rate of 0.14 kg/min through a first arm of a second T and merged with a water stream flowing at a rate of 0.5 kg/min through a second arm of the second T. The water/surfactant stream was then passed -through a second arm of the first T and merged with the prepolymer. The merged water/surfactant/prepolymer stream was fed to the input port of an IKA DR3-9 DISPAX™ REACTOR rotor stator instrument (a trademark of IKA WORKS, Inc) operating at 2964 rpm. Extrapolation of actual data to the IA/P ratio of 0.64 gave the particle size of 1.4 microns, which led to settling and phase-separation of PUD on shelf in less than a week.

Examples 25-27 demonstrate the effect of temperature stability and solid capability and viscosity. PU dispersions having POE diol content less than 6 weight percent produced stable PU dispersion and had excellent temperature stabilities (Table II).

Comparative Examples 25-27. Example 10 was repeated except that the amount of E-1000 in the prepolymer was between from 6 to 15 weight percent The resulting polyurethane particles in the aqueous phase were of very small particle size, approximately 120 nm. Formulations containing more than 6 weight percent of the hydrophobic alkylene polyol oxide could not render a polyurethane dispersion having a solids level of more than 50 weight percent. Table III summarizes the relationship of viscosity and particle size as a function of temperature.

TABLE III

| Ex. No. | Polyol-1000 Content | | 25° C | 40° C | 50° C | 70° C |
|---|---|---|---|---|---|---|
| Comp. 1 | 0 | Viscosity (cps) | 16 | 13.5 | 12.5 | 12.5 |
| | 0 | Particle size (Dv, nm) | 369 | 457 | 420 | 443 |
| 5 | 5 | Viscosity (cps) | 129 | 143 | 169 | 194.5 |
| | | Particle size (Dv, nm) | 118 | 118 | 117 | 118 |
| Comp. 24 | 8 | Viscosity (cps) | 6340 | 8900 | Dispersion solidified during heating | |
| | | Particle size (Dv, nm) | 107 | 102 | | |
| Comp. 25 | 10 | Viscosity (cps) | A 45 weight percent solid dispersion could not be made | | | |
| | | Particle size (Dv, nm) | | | | |
| Comp. 26 | 15 | Viscosity (cps) | A 45 weight percent solid dispersion could not be made | | | |
| | | Particle size (Dv, nm) | | | | |

Example 28. Films were prepared by coagulating the dispersions, diluted to 23 percent solid content, on a metal plate coated with a thin layer of calcium nitrate. The films were leached in a 45° C water bath for 10 minutes, followed by drying and posturing in a 110°C oven for 60 minutes. Property tests of the films included tensile strength, elongation, and stress at 100 percent and 200 percent elongations. The results of film properties of 0.0 percent and 5.15 percent E-1000 containing polyurethane dispersion systems with and without shear-aging are shown in Table IV below:

Table IV

| | PU + E-1000 (0 percent) | | PU + E-1000 (5.15 percent) | |
|---|---|---|---|---|
| | Before shear | Shear-aged | Before shear | Shear-aged |
| Tensile Strength (psi) | 4648 | Failed during Shear Stability Test . | 3511 | 3270 |
| Elongation (percent) | 697 | | 731 | 744 |
| Stress @100 percent (psi) | 372 | | 272 | 273 |
| Stress @ 200 percent (psi) | 613 | | 415 | 410 |

The dispersions containing E-1000 formed excellent films. The results establish that a shear-aged dispersion with 5.15 percent Polyol-1000 retained film properties as compared to its fresh counterpart, while the dispersion without Polyol-1000 failed during the shear stability test.

From the foregoing, it will be observed that numerous variations and modifications may be effected without departing from the true spirit and scope of the novel concepts of the invention.

**Claims**

1.  An isocyanate terminated polyurethane prepolymer comprising the reaction product of:

    (A) a polyisocyanate;
    (B) a high molecular weight active-hydrogen containing material; and
    (C) a hydrophilic alkylene oxide polyol or polyamine having a molecular weight between 800 to 1,500, wherein said hydrophilic alkylene oxide polyol or polyamine is a polyoxyethylene polyol, a polyoxyethylene polyamine, a polyoxyethylenepropylene polyol or a polyoxyethylenepropylene polyamine, and wherein the amount of hydrophilic alkylene oxide polyol or polyamine in the prepolymer is from 0.5 to 5.5 weight percent.

2.  The polyurethane prepolymer of Claim 1, wherein the high molecular weight active-hydrogen containing material has a water solubility of less than 10.0 g per 100 g of water at 25°C.

3.  The polyurethane prepolymer of Claim 2, wherein the high molecular weight active-hydrogen containing material has a water solubility of less than 2.0 g per 100 g of water at 25 °C.

4.  The polyurethane prepolymer of Claim 1, wherein the high molecular weight active-hydrogen containing material is hydrophobic

5.  The polyurethane prepolymer of Claim 1, wherein the hydrophilic alkylene oxide polyol or polyamine is a homopolymer.

6.  The polyurethane prepolymer of Claim 1, wherein the hydrophilic alkylene oxide polyol or polyamine is a random or block copolymer.

7.  The polyurethane prepolymer of Claim 1, wherein the isocyanate is bis(isocyanato) methylcyclohexane or isomeric mixtures thereof.

8.  The polyurethane prepolymer of Claim 1, wherein the high molecular weight active-hydrogen containing material is a linear or branched polyoxypropylene or polyoxybutylene polyol having ethylene oxide capping of from 0 to 25 weight percent.

9.  The polyurethane prepolymer of Claim 1, wherein the hydrophilic alkylene oxide polyol or polyamine in the prepolymer is present in an amount sufficient to reduce the interfacial tension of the prepolymer to less than or equal to 10 dynes/cm.

10. The polyurethane prepolymer of Claim 1, wherein the amount of hydrophilic alkylene oxide polyol or polyamine in the prepolymer is less than or equal to 4 weight percent.

11. The polyurethane prepolymer of Claim 1, wherein the combination of the high molecular weight active-hydrogen containing material and hydrophilic alkylene oxide polyol or polyamine comprises from 50 to 90 weight percent of the prepolymer.

12. The polyurethane prepolymer of Claim 8, wherein from 75 to 100 weight percent of the high molecular weight active-hydrogen containing material contains polyoxypropylene or polyoxybutylene units.

13. The polyurethane prepolymer of Claim 1, wherein the polyisocyanate is 1,3-bis-(isocyanato methylcyclohexane), 1,4-bis-(isocyanato methylcyclohexane), or a mixture thereof.

14. An aqueous polyurethane dispersion comprising the reaction product of

    (A) a prepolymer composed of:

        (i) a polyisocyanate;
        (ii) a high molecular weight active-hydrogen containing material, optionally substituted with hydrophilic ethylene oxide groups; and
        (iii) a hydrophilic alkylene oxide polyol or polyamine having a functionality of two or greater and a molecular weight from 800 to 1,500, wherein said hydrophilic alkylene oxide polyol or polyamine is a polyoxyethylene polyol, a polyoxyethylene polyamine, a polyoxyethylenepropylene polyol or a polyoxyethylenepropylene polyamine wherein the amount of hydrophilic alkylene oxide polyol or polyamine in the prepolymer is from 0.5 to 5.5 weight percent.

(B) water; and
(C) optionally, a chain extender and/or a surfactant.

15. The aqueous polyurethane dispersion of Claim 14, wherein the amount of reaction product in the dispersion is from 40 to 60 weight percent.

16. The aqueous polyurethane dispersion of Claim 14, wherein the volume average particle size of the reaction product is from 50 to 1000 nm.

17. The aqueous polyurethane dispersion of Claim 14, wherein the reaction product has a polydispersity index (PDI) from 1.0 to 2.0.

18. The aqueous polyurethane dispersion of Claim 14, wherein the dispersion is shear, shelf, temperature, pH and electrolyte stable.

19. The aqueous polyurethane dispersion of Claim 14, wherein the dispersion is free of organic solvent.

20. The aqueous polyurethane dispersion of Claim 14, wherein the polyisocyanate is 1,3-bis-(isocyanato methylcyclohexane), 1,4-bis-(isocyanato methylcyclohexane), or a mixture thereof.

21. A disposable medical product derived from the aqueous polyurethane dispersion of Claim 14.

22. A process of preparing a disposable medical product which comprises (a) immersing a former coated with a coagulating agent into the aqueous polyurethane dispersion of Claim 14; (b) optionally leaching the former in a water bath; and (c) drying the former.

23. The process of Claim 22, wherein the coagulating agent is a salt derived from Group I, II, or III metal.

24. A laminate, a backed substrate, film, adhesive, coating foam tubing, piping or shaped article derived from the polyurethane dispersion of Claim 14.

25. A method of preparing an aqueous polyurethane dispersion which comprises reacting:

(A) a prepolymer which is the reaction product of:

(i) a polyisocyanate;
(ii) a high molecular weight active-hydrogen containing material, optionally substituted with hydrophilic ethylene oxide groups; and
(iii) a hydrophilic alkylene oxide polyol or polyamine having a functionality of two or greater and molecular weight between 800 to 1500, wherein said hydrophilic alkylene oxide polyol or polyamine is a polyoxyethylene polyol, a polyoxyethylene polyamine, a polyoxyethylenepropylene polyol or a polyoxyethylenepropylene polyamine, an wherein the amount of hydrophilic alkylene oxide polyol or polyamine in the prepolymer is from 0.5 to 5.5 weight percent.

(B) water; and
(C) optionally, a chain extender and/or surfactant.

26. The method of Claim 25, wherein the polyoxyethylene polyol, polyoxyethylene polyamine, polyoxyethylenepropylene polyol or polyoxyethylenepropylene polyamine is present in an amount sufficient to reduce the interfacial tension of the prepolymer to less than or equal to 10 dynes/cm.

27. The method of Claim 25, which further comprises adding to the reaction product of prepolymer and water and, optionally, chain extender and/or surfactant additional water at a concentration and for a time sufficient to render an aqueous dispersion containing from 40 to 60 weight percent solids.

28. The method of Claim 25, wherein the surfactant is nonionic, anionic, cationic, zwitterionic or a mixture of nonionic with cationic, anionic, or zwitterionic surfactants.

29. The method of Claim 28, wherein the surfactant is added in an amount sufficient to render a dispersion having an average particle size between 50 and 1000 nm and polydispersity index of from 0.8 to 2.0.

30. The method of Claim 25, wherein the polyisocyanate is 1,3-bis-(isocyanato methylcyclohexane), 1,4-bis-(isocyanato methylcyclohexane), or a mixture thereof.

31. A process for preparing an aqueous polyurethane dispersion comprising the steps of: (a) continuously merging in the presence of an emulsifying and stabilizing effective amount of surfactant a first stream containing water flowing at a rate $r_1$, together with a second stream containing a polyurethane prepolymer flowing at a rate $r_2$ to form a dispersion prepolymer, and (b) contacting the dispersion prepolymer with a chain extending agent under reaction conditions sufficient to form a polyurethane dispersion wherein the ratio of $r_2:r_1$ is not greater than 65:35.

32. The process of Claim 31, wherein steps (a) and (b) are conducted in the absence of organic solvent.

33. The process of Claim 31, wherein the polyurethane prepolymer comprises the reaction product of :

(A) a polyisocyanate;
(B) a high molecular weight active-hydrogen containing material, optionally substituted with hydrophilic ethylene oxide groups; and
(C) a hydrophilic alkylene oxide polyol or polyamine having a molecular weight between 800 to 1,500 wherein said hydrophilic alkylene oxide polyol or polyamine is a polyoxyethylene polyol, a polyoxyethylene polyamine, a polyoxyethylenepropylene polyol or a polyoxyethylenepropylene polyamine, and

wherein the amount of hydrophilic alkylene oxide polyol or polyamine in the prepolymer is from 0.5 to 5.5 weight percent.

34. The process of Claim 31, wherein the ratio of $r_2: r_1$ is not greater than 60:40.

35. The process of Claim 34, wherein the ratio of $r_2:r_1$ is not greater than 55:45

36. The process of Claim 35, wherein the ratio of $r_2:r_1$ is not greater than 50:50.

37. The process of Claim 33, wherein polyisocyanate is 1,3-bis-(isocyanato methylcyclohexane), 1,4-bis-(isocyanato methylcyclohexane), or a mixture thereof.


**Patentansprüche**

1. Isocyanat-terminiertes Polyurethanpräpolymer, umfassend das Reaktionsprodukt von:

(A) einem Polyisocyanat;
(B) einem Material mit hoher Molekülmasse, das aktiven Wasserstoff enthält; und
(C) einem hydrophilen Alkylenoxid-Polyol oder - Polyamin mit einer Molekülmasse zwischen 800 und 1.500, wobei das hydrophile Alkylenoxid-Polyol oder -Polyamin ein Polyethylenoxid-Polyol, ein Polyethylenoxid-Polyamin, ein Polyethylenpropylenoxid-Polyol oder ein Polyethylenpropylenoxid-Polyamin ist, und wobei die Menge an hydrophilem Alkylenoxid-Polyol oder -Polyamin in dem Präpolymer 0,5 bis 5,5 Gewichtsprozent beträgt.

2. Polyurethanpräpolymer nach Anspruch 1, wobei das Material mit hoher Molekülmasse, das aktiven Wasserstoff enthält, eine Wasserlöslichkeit von weniger als 10,0 g pro 100 g Wasser bei 25 °C hat.

3. Polyurethanpräpolymer nach Anspruch 2, wobei das Material mit hoher Molekülmasse, das aktiven Wasserstoff enthält, eine Wasserlöslichkeit von weniger als 2,0 g pro 100 g Wasser bei 25 °C hat.

**4.** Polyurethanpräpolymer nach Anspruch 1, wobei das Material mit hoher Molekülmasse, das aktiven Wasserstoff enthält, hydrophob ist.

**5.** Polyurethanpräpolymer nach Anspruch 1, wobei das hydrophile Alkylenoxid-Polyol oder -Polyamin ein Homopolymer ist.

**6.** Polyurethanpräpolymer nach Anspruch 1, wobei das hydrophile Alkylenoxid-Polyol oder -Polyamin ein zufällig aufgebautes oder ein Block-Copolymer ist.

**7.** Polyurethanpräpolymer nach Anspruch 1, wobei es sich bei dem Isocyanat um bis-(Isocyanato)methylcyclohexan oder Isomermischungen davon handelt.

**8.** Polyurethanpräpolymer nach Anspruch 1, wobei das Material mit hoher Molekülmasse, das aktiven Wasserstoff enthält, ein geradkettiges oder verzweigtes Polypropylenoxid- oder Polybutylenoxid-Polyol ist, deren Enden mit Ethylenoxid versehen sind, welches 0 bis 25 Gewichtsprozent ausmacht.

**9.** Polyurethanpräpolymer nach Anspruch 1, wobei das hydrophile Alkylenoxid-Polyol oder -Polyamin in dem Präpolymer in einer Menge vorliegt, die ausreichend ist, um die Grenzflächenspannung des Präpolymers auf höchstens 10 Dyn/cm zu senken.

**10.** Polyurethanpräpolymer nach Anspruch 1, wobei die Menge an hydrophilem Alkylenoxid-Polyol oder -Polyamin in dem Präpolymer höchstens 4 Gewichtsprozent beträgt.

**11.** Polyurethanpräpolymer nach Anspruch 1, wobei die Kombination des Materials mit hoher Molekülmasse, das aktiven Wasserstoff enthält, und des hydrophilen Alkylenoxid-Polyols oder -Polyamins 50 bis 90 Gewichtsprozent des Präpolymers ausmacht.

**12.** Polyurethanpräpolymer nach Anspruch 8, wobei 75 bis 100 Gewichtsprozent des Materials mit hoher Molekülmasse, das aktiven Wasserstoff enthält, Polypropylenoxid- oder Polybutylenoxideinheiten enthält.

**13.** Polyurethanpräpolymer nach Anspruch 1, wobei es sich bei dem Polyisocyanat um 1,3-bis-(Isocyanatomethylcyclohexan), 1,4-bis-(Isocyanatomethylcyclohexan) oder eine Mischung daraus handelt.

**14.** Wässrige Polyurethandispersion, umfassend das Reaktionsprodukt von:

(A) einem Präpolymer zusammengesetzt aus:

(i) einem Polyisocyanat;
(ii) einem Material mit hoher Molekülmasse, das aktiven Wasserstoff enthält und möglicherweise mit hydrophilen Ethylenoxidgruppen substituiert ist; und
(iii) einem hydrophilen Alkylenoxid-Polyol oder - Polyamin mit mindestens zwei funktionellen Gruppen und einer Molekülmasse von 800 bis 1.500, wobei das hydrophile Alkylenoxid-Polyol oder -Polyamin ein Polyethylenoxid-Polyol, ein Polyethylenoxid-Polyamin, ein Polyethylenpropylenoxid-Polyol oder ein Polyethylenpropylenoxid-Polyamin ist, und wobei die Menge an hydrophilem Alkylenoxid-Polyol oder -Polyamin in dem Präpolymer 0,5 bis 5,5 Gewichtsprozent beträgt.

(B) Wasser; und
(C) möglicherweise einem Kettenverlängerer und/oder einem Tensid.

**15.** Wässrige Polyurethandispersion nach Anspruch 14, wobei die Menge des Reaktionsproduktes in der Dispersion 40 bis 60 Gewichtsprozent beträgt.

**16.** Wässrige Polyurethandispersion nach Anspruch 14, wobei die volumenbezogene mittlere Partikelgröße des Reaktionsprodukts 50 bis 1000 nm beträgt.

**17.** Wässrige Polyurethandispersion nach Anspruch 14, wobei das Reaktionsproduktes einen Polydispersitätsindex (PDI) von 1,0 bis 2,0 hat.

**18.** Wässrige Polyurethandispersion nach Anspruch 14, wobei die Dispersion scherkraft-, lagerungs-, temperatur-, pH- und elektrolytenstabil ist.

**19.** Wässrige Polyurethandispersion nach Anspruch 14, wobei die Dispersion frei von organischen Lösemitteln ist.

**20.** Wässrige Polyurethandispersion nach Anspruch 14, wobei es sich bei dem Polyisocyanat um 1,3-bis-(Isocyanatomethylcyclohexan), 1,4-bis-(Isocyanatomethylcyclohexan) oder eine Mischung daraus handelt.

**21.** Medizinisches Einwegprodukt, das aus der wässrigen Polyurethandispersion nach Anspruch 14 gewonnen wurde.

**22.** Verfahren zur Herstellung eines medizinischen Einwegprodukts, das Folgendes umfasst: (a) Eintauchen eines Formgebungselements, das mit einem Koagulierungsmittel beschichtet ist, in die wässrige Polyurethandispersion nach Anspruch 14; (b) möglicherweise Auslaugen des Formgebungselements in einem Wasserbad; und (c) Trocknen des Formgebungselements.

**23.** Verfahren nach Anspruch 22, wobei das Koagulierungsmittel ein Salz eines Metalls der Gruppen I, II oder III ist.

**24.** Schichtstoff, verstärktes Substrat, Folie, Klebstoff, Beschichtung, Schaum, Schlauch, Rohrleitung oder Formteil, aus der Polyurethandispersion nach Anspruch 14 gewonnen.

**25.** Verfahren zur Herstellung einer wässrigen Polyurethandispersion, umfassend das Umsetzen:

(A) eines Präpolymers, welches das Reaktionsprodukt darstellt von:

(i) einem Polyisocyanat;
(ii) einem Material mit hoher Molekülmasse, das aktiven Wasserstoff enthält und möglicherweise mit hydrophilen Ethylenoxidgruppen substituiert ist; und
(iii) einem hydrophilen Alkylenoxid-Polyol oder - Polyamin mit mindestens zwei funktionellen Gruppen und einer Molekülmasse zwischen 800 und 1.500, wobei das hydrophile Alkylenoxid-Polyol oder -Polyamin ein Polyethylenoxid-Polyol, ein Polyethylenoxid-Polyamin, ein Polyethylenpropylenoxid-Polyol oder ein Polyethylenpropylenoxid-Polyamin ist, und wobei die Menge an hydrophilem Alkylenoxid-Polyol oder -Polyamin in dem Präpolymer 0,5 bis 5,5 Gewichtsprozent beträgt.

(B) von Wasser; und
(C) eines Kettenverlängerers und/oder Tensids.

**26.** Verfahren nach Anspruch 25, wobei das Polyethylenoxid-Polyol, Polyethylenoxid-Polyamin, Polyethylenpropylenoxid-Polyol oder Polyethylenpropylenoxid-Polyamin in einer Menge vorliegt, die ausreichend ist, um die Grenzflächenspannung des Präpolymer auf höchstens 10 Dyn/cm zu senken.

**27.** Verfahren nach Anspruch 25, welches weiterhin den Zusatz weiteren Wassers zum Reaktionsprodukt aus Präpolymer und Wasser und möglicherweise Kettenverlängerer und/oder Tensid umfasst, in einer Konzentration und für eine Zeitdauer, die ausreichend sind, um eine wässrige Dispersion zu erzielen, die 40 bis 60 Gewichtsprozent an Feststoffen enthält.

**28.** Verfahren nach Anspruch 25, wobei das Tensid nichtionisch, anionisch, kationisch, zwitterionisch oder eine Mischung von nichtionischen mit kationischen, anionischen oder zwitterionischen Tensiden ist.

**29.** Verfahren nach Anspruch 28, wobei das Tensid in einer Menge zugesetzt wird, die ausreichend ist, um eine Dispersion zu erzielen, welche eine mittlere Partikelgröße zwischen 50 und 1.000 nm und einen Polydispersitätsindex von 0,8 bis 2,0 hat.

**30.** Verfahren nach Anspruch 25, wobei es sich bei dem Polyisocyanat um 1,3-bis-(Isocyanatomethylcyclohexan), 1,4-bis-(Isocyanatomethylcyclohexan) oder eine Mischung daraus handelt.

**31.** Verfahren zur Herstellung einer wässrigen Polyurethandispersion, die folgenden Schritte umfassend: (a) kontinuierliches Zusammenleiten, in Gegenwart einer emulgierend und stabilisierend wirkenden Menge an Tensid, eines ersten Stroms, der Wasser enthält und mit einer Flussrate $r_1$ fließt, mit einem zweiten Strom, der ein Polyurethanpräpolymer enthält und mit einer Flussrate $r_2$ fließt, um ein Dispersionspräpolymer zu bilden, und (b) Inkontaktbringen des Dispersionspräpolymers mit einem Kettenverlängerungsmittel unter Reaktionsbedingungen, die ausreichend sind, um eine Polyurethandispersion zu bilden, wobei das Verhältnis von $r_2:r_1$ nicht größer als 65:35 ist.

**32.** Verfahren nach Anspruch 31, wobei die Schritte (a) und (b) in Abwesenheit von organischen Lösemitteln durchgeführt werden.

**33.** Verfahren nach Anspruch 31, wobei das Polyurethanpräpolymer das Reaktionsprodukt umfasst von:

(A) einem Polyisocyanat;
(B) einem Material mit hoher Molekülmasse, das aktiven Wasserstoff enthält und möglicherweise mit hydrophilen Ethylenoxidgruppen substituiert ist; und
(C) einem hydrophilen Alkylenoxid-Polyol oder - Polyamin mit einer Molekülmasse zwischen 800 und 1.500, wobei das hydrophile Alkylenoxid-Polyol oder -Polyamin ein Polyethylenoxid-Polyol, ein Polyethylenoxid-Polyamin, ein Polyethylenpropylenoxid-Polyol oder ein Polyethylenpropylenoxid-Polyamin ist, und

wobei die Menge an hydrophilem Alkylenoxid-Polyol oder- Polyamin in dem Präpolymer 0,5 bis 5,5 Gewichtsprozent beträgt.

**34.** Verfahren nach Anspruch 31, wobei das Verhältnis von $r_2:r_1$ nicht größer als 60:40 ist.

**35.** Verfahren nach Anspruch 34, wobei das Verhältnis von $r_2:r_1$ nicht größer als 55:45 ist.

**36.** Verfahren nach Anspruch 35, wobei das Verhältnis von $r_2:r_1$ nicht größer als 50:50 ist.

**37.** Verfahren nach Anspruch 33, wobei es sich bei dem Polyisocyanat um 1,3-bis-(Isocyanatomethylcyclohexan), 1,4-bis-(Isocyanatomethylcyclohexan) oder eine Mischung daraus handelt.

**Revendications**

**1.** Prépolymère polyuréthane à groupes terminaux isocyanate, comprenant le produit de réaction

A) d'un polyisocyanate,
B) d'un corps à masse moléculaire élevée, contenant des atomes d'hydrogène actifs,
C) et d'un polyol ou d'une polyamine hydrophile dérivé(e) d'oxyde d'alkylène et présentant une masse molaire de 800 à 1500, lequel polyol ou laquelle polyamine hydrophile dérivé(e) d'oxyde d'alkylène est un polyoxyéthylène-polyol, une polyoxyéthylène-polyamine, un polyoxy(éthylène-propylène)-polyol ou une polyoxy-(éthylène-propylène)-polyamine, et lequel polyol ou laquelle polyamine hydrophile dérivé(e) d'oxyde d'alkylène se trouve dans le prépolymère en une proportion de 0,5 à 5,5 % en poids.

**2.** Prépolymère polyuréthane conforme à la revendication 1, dans lequel le corps à masse moléculaire élevée contenant des atomes d'hydrogène actifs présente une solubilité dans l'eau inférieure à 10,0 g pour 100 g d'eau à 25 °C.

**3.** Prépolymère polyuréthane conforme à la revendication 2, dans lequel le corps à masse moléculaire élevée contenant des atomes d'hydrogène actifs présente une solubilité dans l'eau inférieure à 2,0 g pour 100 g d'eau à 25 °C.

**4.** Prépolymère polyuréthane conforme à la revendication 1, dans lequel le corps à masse moléculaire élevée contenant des atomes d'hydrogène actifs est hydrophobe.

**5.** Prépolymère polyuréthane conforme à la revendication 1, dans lequel le polyol ou la polyamine hydrophile dérivé (e) d'oxyde d'alkylène est un homopolymère.

**6.** Prépolymère polyuréthane conforme à la revendication 1, dans lequel le polyol ou la polyamine hydrophile dérivé (e) d'oxyde d'alkylène est un copolymère statistique ou un copolymère à blocs.

**7.** Prépolymère polyuréthane conforme à la revendication 1, pour lequel l'isocyanate est un bis(isocyanatométhyl) cyclohexane ou un mélange d'isomères de ce composé.

**8.** Prépolymère polyuréthane conforme à la revendication 1, dans lequel le corps à masse moléculaire élevée contenant des atomes d'hydrogène actifs est un polyoxypropylène-polyol ou polyoxybutylènepolyol linéaire ou ramifié, doté de coiffes dérivées d'oxyde d'éthylène pour 0 à 25 % en poids.

**9.** Prépolymère polyuréthane conforme à la revendication 1, dans lequel le polyol ou la polyamine hydrophile dérivé (e) d'oxyde d'alkylène se trouve présent(e) dans le prépolymère en une quantité suffisante pour abaisser la tension interfaciale du prépolymère jusqu'à une valeur inférieure ou égale à 10 dynes par centimètre.

**10.** Prépolymère polyuréthane conforme à la revendication 1, dans lequel le polyol ou la polyamine hydrophile dérivé (e) d'oxyde d'alkylène se trouve présent(e) dans le prépolymère en une proportion inférieure ou égale à 4 % en poids.

**11.** Prépolymère polyuréthane conforme à la revendication 1, dans lequel le total du corps à masse moléculaire élevée contenant des atomes d'hydrogène actifs et du polyol ou de la polyamine hydrophile dérivé(e) d'oxyde d'alkylène représente de 50 à 90 % du poids du prépolymère.

**12.** Prépolymère polyuréthane conforme à la revendication 8, dans lequel le corps à masse moléculaire élevée contenant des atomes d'hydrogène actifs contient pour 75 à 100 % en poids de motifs de type polyoxypropylène ou polyoxybutylène.

**13.** Prépolymère polyuréthane conforme à la revendication 1, dans lequel le polyisocyanate est du 1,3-bis(isocyanato-méthyl)cyclohexane, du 1,4-bis(isocyanatométhyl)cyclohexane, ou un mélange de ces composés.

**14.** Dispersion aqueuse de polyuréthane, comprenant le produit de réaction :

    A) d'un prépolymère composé

        i) d'un polyisocyanate,
        ii) d'un corps à masse moléculaire élevée, contenant des atomes d'hydrogène actifs et portant, en option, des groupes substituants hydrophiles dérivés d'oxyde d'éthylène,
        iii) et d'un polyol ou d'une polyamine hydrophile dérivé(e) d'oxyde d'alkylène, comportant deux groupes fonctionnels ou plus et présentant une masse molaire de 800 à 1500, lequel polyol ou laquelle polyamine hydrophile dérivé(e) d'oxyde d'alkylène est un polyoxyéthylène-polyol, une polyoxyéthylène-polyamine, un polyoxy(éthylène-propylène)-polyol ou une polyoxy(éthylène-propylène)-polyamine, et lequel polyol ou laquelle polyamine hydrophile dérivé(e) d'oxyde d'alkylène se trouve dans le prépolymère en une proportion de 0,5 à 5,5 % en poids,

    B) et d'eau,
    C) et en option, d'un agent d'allongement de chaîne et/ou d'un tensioactif.

**15.** Dispersion aqueuse de polyuréthane, conforme à la revendication 14, dans laquelle dispersion le produit de réaction se trouve présent en une proportion de 40 à 60 % en poids.

**16.** Dispersion aqueuse de polyuréthane, conforme à la revendication 14, dans laquelle la taille moyenne, en volume, des particules de produit de réaction vaut de 50 à 1000 nm.

**17.** Dispersion aqueuse de polyuréthane, conforme à la revendication 14, dans laquelle le produit de réaction présente un indice de polydispersité (IPD) valant de 1,0 à 2,0.

**18.** Dispersion aqueuse de polyuréthane, conforme à la revendication 14, laquelle dispersion est stable en magasin, vis-à-vis du cisaillement, de la température et du pH, et en présence d'un électrolyte.

**19.** Dispersion aqueuse de polyuréthane, conforme à la revendication 14, dans laquelle dispersion il n'y a aucun solvant organique.

**20.** Dispersion aqueuse de polyuréthane, conforme à la revendication 14, pour laquelle le polyisocyanate est du 1,3-bis(isocyanatométhyl)cyclohexane, du 1,4-bis(isocyanatométhyl)cyclohexane, ou un mélange de ces composés.

**21.** Produit médical jetable dérivé d'une dispersion aqueuse de polyuréthane conforme à la revendication 14.

**22.** Procédé de préparation d'un produit médical jetable, lequel procédé comporte les étapes suivantes :

a) plonger un gabarit, revêtu d'un agent de coagulation, dans une dispersion aqueuse de polyuréthane conforme à la revendication 14 ;
b) en option, rincer le gabarit dans un bain d'eau ;
c) et faire sécher le gabarit.

**23.** Procédé conforme à la revendication 22, dans lequel l'agent de coagulation est un sel dérivé d'un métal du Groupe I, II ou III.

**24.** Stratifié, substrat muni d'un dos, film, adhésif, revêtement, mousse, tuyau, canalisation ou article façonné, dérivé(e) d'une dispersion de polyuréthane conforme à la revendication 14.

**25.** Procédé de préparation d'une dispersion aqueuse de polyuréthane, comprenant le fait de faire réagir :

A) un prépolymère qui est le produit de réaction

i) d'un polyisocyanate,
ii) d'un corps à masse moléculaire élevée, contenant des atomes d'hydrogène actifs et portant, en option, des groupes substituants hydrophiles dérivés d'oxyde d'éthylène,
iii) et d'un polyol ou d'une polyamine hydrophile dérivé(e) d'oxyde d'alkylène, comportant deux groupes fonctionnels ou plus et présentant une masse molaire de 800 à 1500, lequel polyol ou laquelle polyamine hydrophile dérivé(e) d'oxyde d'alkylène est un polyoxyéthylène-polyol, une polyoxyéthylène-polyamine, un polyoxy(éthylène-propylène)-polyol ou une polyoxy(éthylène-propylène)-polyamine, et lequel polyol ou laquelle polyamine hydrophile dérivé(e) d'oxyde d'alkylène se trouve dans le prépolymère en une proportion de 0,5 à 5,5 % en poids,

B) de l'eau,
C) et en option, un agent d'allongement de chaîne et/ou un tensioactif.

**26.** Procédé conforme à la revendication 25, dans lequel le polyoxyéthylène-polyol, la polyoxyéthylène-polyamine, le polyoxy-(éthylène-propylène)-polyol ou la polyoxy(éthylène-propylène)-polyamine se trouve présent(e) en une quantité suffisante pour abaisser la tension interfaciale du prépolymère jusqu'à une valeur inférieure ou égale à 10 dynes par centimètre.

**27.** Procédé conforme à la revendication 25, qui comprend en outre le fait d'ajouter, au produit de réaction du prépolymère et d'eau et de l'agent d'allongement de chaîne et/ou du tensioactif optionnel(s), un supplément d'eau, en une quantité et en un laps de temps suffisants pour qu'on obtienne une dispersion aqueuse contenant de 40 à 60 % en poids de solides.

**28.** Procédé conforme à la revendication 25, dans lequel le tensioactif est un tensioactif non-ionique, anionique, cationique ou zwitterionique, ou un mélange de tensioactif non-ionique et de tensioactif anionique, cationique ou zwitterionique.

**29.** Procédé conforme à la revendication 28, dans lequel le tensioactif est ajouté en une quantité suffisante pour qu'on obtienne une dispersion où la taille moyenne des particules vaut de 50 à 1000 nm et qui présente un indice de polydispersité de 0,8 à 2,0.

**30.** Procédé conforme à la revendication 25, dans lequel le polyisocyanate est du 1,3-bis(isocyanato-méthyl)cyclohexane, du 1,4-bis-(isocyanatométhyl)cyclohexane, ou un mélange de ces composés.

**31.** Procédé de préparation d'une dispersion aqueuse de polyuréthane, qui comprend les étapes suivantes :

a) faire confluer en continu, en présence d'une quantité de tensioactif suffisante pour avoir des effets d'émulsification et de stabilisation, un premier courant contenant de l'eau, coulant à un débit $r_1$, et un deuxième courant contenant un prépolymère polyuréthane, coulant à un débit $r_2$, de manière à obtenir une dispersion de prépolymère,
b) et mettre cette dispersion de prépolymère en contact avec un agent d'allongement de chaînes, dans des conditions de réaction suffisantes pour qu'on obtienne une dispersion de polyuréthane,

et dans lequel le rapport $r_2/r_1$ vaut au plus 65/35.

**32.** Procédé conforme à la revendication 31, dans lequel les étapes (a) et (b) sont menées en l'absence de solvant organique.

**33.** Procédé conforme à la revendication 31, dans lequel le prépolymère polyuréthane comprend le produit de réaction

A) d'un polyisocyanate,
B) d'un corps à masse moléculaire élevée, contenant des atomes d'hydrogène actifs et portant, en option, des groupes substituants hydrophiles dérivés d'oxyde d'éthylène,
C) et d'un polyol ou d'une polyamine hydrophile dérivé(e) d'oxyde d'alkylène et présentant une masse molaire de 800 à 1500, lequel polyol ou laquelle polyamine hydrophile dérivé(e) d'oxyde d'alkylène est un polyoxyéthylène-polyol, une polyoxyéthylène-polyamine, un polyoxy(éthylène-propylène)-polyol ou une polyoxy-(éthylène-propylène)-polyamine,

et dans lequel le polyol ou la polyamine hydrophile dérivé(e) d'oxyde d'alkylène se trouve dans le prépolymère en une proportion de 0,5 à 5,5 % en poids.

**34.** Procédé conforme à la revendication 31, dans lequel le rapport $r_2/r_1$ vaut au plus 60/40.

**35.** Procédé conforme à la revendication 34, dans lequel le rapport $r_2/r_1$ vaut au plus 55/45.

**36.** Procédé conforme à la revendication 35, dans lequel le rapport $r_2/r_1$ vaut au plus 50/50.

**37.** Procédé conforme à la revendication 33, dans lequel le polyisocyanate est du 1,3-bis(isocyanato-méthyl)cyclohexane, du 1,4-bis-(isocyanatométhyl)cyclohexane, ou un mélange de ces composés.

**EP 1 572 771 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3479310 A
- JP 55110367 A
- US 5739212 A
- US 1982 A
- US 3749310 A, Dieterich
- US 6087440 A
- US 5997969 A
- US 5539021 A
- US 5494960 A
- WO 9841554 A

**Non-patent literature cited in the description**

- *Angew Chem,* 1972, vol. 82, 52
- *Angew. Makromol. Chem.,* 1981, vol. 98